# EUROPEAN PATENT APPLICATION

(11) **EP 3 139 666 A1**
(43) Date of publication of application: **08.03.2017**
(21) Application number: 16187140.5
(22) Date of filing: 02.09.2016
(51) Int. Cl.: H04W 48/18, H04W 12/06, H04W 36/00, H04W 76/02

(54) **RADIO COMMUNICATION DEVICE, RADIO COMMUNICATION METHOD, AND RADIO COMMUNICATION PROGRAM**

(30) Priority: 07.09.2015 JP 2015175995
(71) Applicant: FUJITSU LIMITED, Kawasaki-shi Kanagawa 211-8588 (JP)
(72) Inventor: IIMORI, Eiji, Kawasaki-shi, Kanagawa 211-8588 (JP)
(74) Representative: Hutchison, James

(57) **Abstract**

A method is proposed to suppress failure in authentication processing, comprising a radio communication device including: a control unit configured to: perform wireless communications using at least one of a first radio access network and a second radio access network, the first radio access network configured to be used when a communication quality of the first radio access network is higher than a threshold value, the second radio access network configured to be used when a communication quality of the first radio access network is equal to or lower than the threshold value, and fix a radio access network for communicating with a specified network, when the control unit starts the wireless communications using the first radio access network and the control unit detects a blocking of specified communications at the radio communication device, to the first radio access network until a specified number of time of communication coupling is reached using the first radio access network.

## Description

### FIELD

The embodiments discussed herein are related to a radio communication device, a radio communication method, and a radio communication program.

### BACKGROUND

A mobile terminal such as a smartphone includes a communication measure that couples to a mobile phone line such as the long term evolution (LTE) or the 3rd generation (3G) and a communication measure that couples to a wireless local area network (LAN) such as the wireless fidelity (Wi-Fi).

Normally, under an environment in which both the mobile phone line and the wireless LAN can be coupled, the mobile terminal couples to the wireless LAN, which has higher priority. When the wireless LAN becomes out of range, the mobile terminal makes switching to the mobile phone line and carries out communications. Among mobile terminals of recent years are terminals in which a link aggregation function of carrying out communications by simultaneously using both the mobile phone line and the wireless LAN is implemented. For example, while being carrying out communications relating to an application A by using a mobile phone line, a mobile terminal carries out communications relating to an application B by using a wireless LAN.

### CITATION LIST

### PATENT DOCUMENTS

[Patent Document 1] Japanese Laid-open Patent Publication No. 2008-136150
[Patent Document 2] Japanese Laid-open Patent Publication No. 2011-166251

### SUMMARY

However, in the above-described technique, if the line is automatically switched in execution of web authentication that is user authentication for using a web service, the web authentication fails.

For example, mobile terminals of recent years simultaneously use the Wi-Fi and a mobile phone line and carry out web access by distributing data to the Wi-Fi and the mobile phone line. Such a mobile terminal accesses a web server by using the Wi-Fi and acquires an authentication screen for using a web service from the web server. Thereafter, due to the deterioration of the quality of the Wi-Fi, the mobile terminal returns a response of authentication information to the web server by using the LTE. In this case, the web server determines that this response is web access by new communication, and transmits an authentication screen to the mobile terminal again.

As above, if the line at the time of the request for web authentication and the line at the time of the response are different, retransmission of the authentication screen is carried out and authentication processing is not started although the authentication request and the authentication response are transmitted from the same mobile terminal.

Techniques to be disclosed are made in view of the above and intend to provide a radio communication device, a radio communication method, and a radio communication program that can suppress failure in authentication processing.

The invention is defined by the claims, to which reference should now be made. According to an embodiment of one aspect of the invention, a radio communication device includes a first radio interface configured to wirelessly coupled to a first wireless station via a first radio access network, the first wireless station coupled to a specified network, a second radio interface configured to wirelessly coupled to a second wireless station via a second radio access network, the second wireless station coupled to the specified network, and a control unit configured to: perform wireless communications using at least one of the first radio access network and the second radio access network, the first radio access network configured to be used when a communication quality of the first radio access network is higher than a threshold value, the second radio access network configured to be used when a communication quality of the first radio access network is equal to or lower than the threshold value, and fix a radio access network for communicating with the specified network, when the control unit starts the wireless communications using the first radio access network and the control unit detects that a blocking of specified communications is set to the radio communication device, to the first radio access network until the wireless communications of specified times are finished using the first radio access network.

### ADVANTAGEOUS EFFECTS OF INVENTION

The radio communication device and the radio communication method according to an embodiment of one aspect of the present invention accomplish an effect of suppressing failure in authentication processing

### BRIEF DESCRIPTION OF DRAWINGS

Embodiments of the invention are set out, by way of example only, with reference to the following drawings, in which:
FIG. 1 is a diagram exemplifying a configuration of a communication system;
FIG. 2 is a diagram exemplifying a functional block configuration of a mobile terminal according to an embodiment;
FIG. 3 is a diagram exemplifying authentication processing by a web authentication system;
FIG. 4 is a diagram exemplifying an authentication screen of a website of web authentication;
FIG. 5 is a diagram explaining a request for web authentication due to change of a subnet;
FIGs. 6A and 6B are diagrams exemplifying success and failure in web authentication processing by a simultaneous communication function;
FIG. 7 is a sequence diagram exemplifying a case in which web authentication fails in simultaneous communications;
FIG. 8 is a diagram exemplifying a display screen of a website that notifies that a mobile terminal is subjected to access limitation;
FIG. 9 is a diagram explaining redirection for web authentication and redirection due to access limitation;
FIGs. 10A and 10B are diagrams exemplifying an operation flow of web authentication processing according to an embodiment;
FIGs. 11A and 11 B are diagrams exemplifying a flow of communications in a web authentication processing according to the embodiment; and
FIG. 12 is a diagram exemplifying a hardware configuration of a computer for implementing a mobile terminal according to an embodiment.

### DESCRI PTI ON OF EMBODIMENTS

Several embodiments will be described in detail below with reference to the drawings. Elements that correspond in plural drawings are given the same numeral.

In recent years, for example, the wireless LAN has been used also in public networks for suppression of overuse of the data amount of packet communications on the mobile phone line and for increase in the speed of the packet communications.

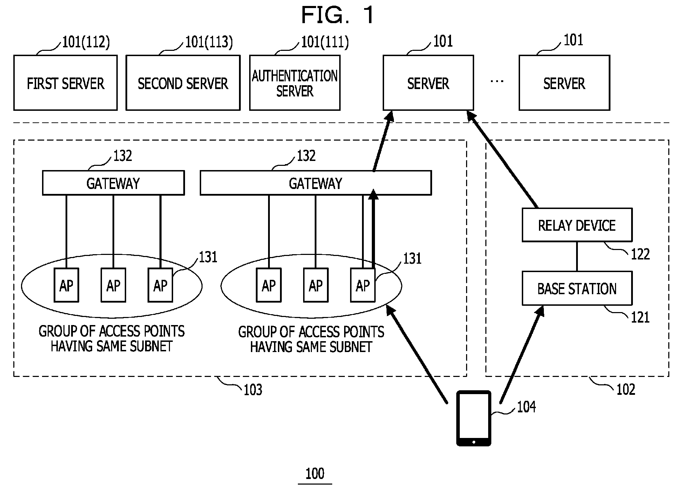

FIG. 1 is a diagram exemplifying a configuration of a communication system 100. For example, the communication system 100 includes plural servers 101, a mobile phone line (may be referred to as a mobile phone access network) 102, a wireless LAN line (may be referred to as a wireless LAN access network) 103, and a mobile terminal 104. The servers 101 may be computers that provide services and data to clients for example. Furthermore, for example, the servers 101 include an authentication server 111 for carrying out authentication to give permission to use the wireless LAN line 103 to the mobile terminal 104, a first server 112 that returns a given error to be described later, and a second server 113 that notifies that the mobile terminal 104 is subjected to access limitation.

The mobile phone line 102 may be a communication line of a cellular system provided by a mobile phone operator or the like for example. The mobile phone line 102 includes a base station (may be referred to as a second wireless station) 121 and a relay device 122 for example. The mobile phone line 102 may be the LTE or the 3G for example. The mobile terminal 104 couples to the base station 121 and carries out communications by the mobile phone line 102 through the base station 121 for example.

Furthermore, the wireless LAN line 103 includes access points (APs) (may be referred to as a first wireless station) 131 and gateways 132 for example. The wireless LAN line 103 may be the Wi-Fi or the worldwide interoperability for microwave access (WiMAX) (registered trademark) for example. The mobile terminal 104 couples to the access point 131 and carries out communications by the wireless LAN line 103 through the access point 131 for example.

The mobile terminal 104 may be a mobile phone, a smartphone, a tablet terminal, a notebook personal computer (PC), or the like for example.

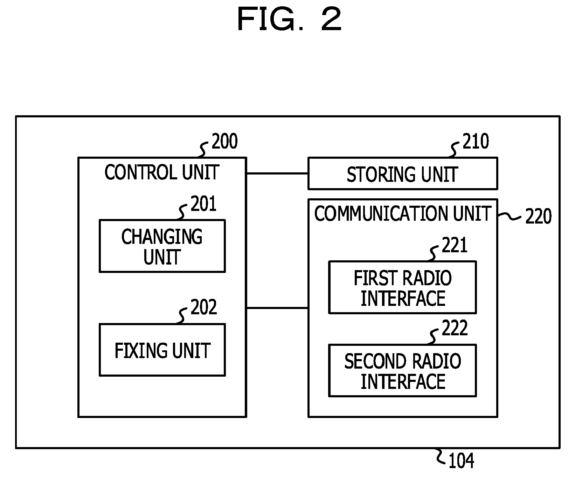

FIG. 2 is a diagram exemplifying a functional block configuration of the mobile terminal 104 according to the embodiment. The mobile terminal 104 includes a control unit 200, a storing unit 210, and a communication unit 220 for example. The control unit 200 includes functional units such as a changing unit 201 and a fixing unit 202 for example. The storing unit 210 of the mobile terminal 104 stores information on first quality and second quality that are determination criteria of the communication quality to be described later, and so forth, for example. The communication unit 220 includes a first radio interface 221 and a second radio interface 222 for example. The first radio interface 221 may be radio communication equipment used for coupling to the wireless LAN line 103 for example. The second radio interface 222 may be radio communication equipment used for coupling to the mobile phone line 102 for example. Details of these respective functional units and details of information stored in the storing unit 210 will be described later.

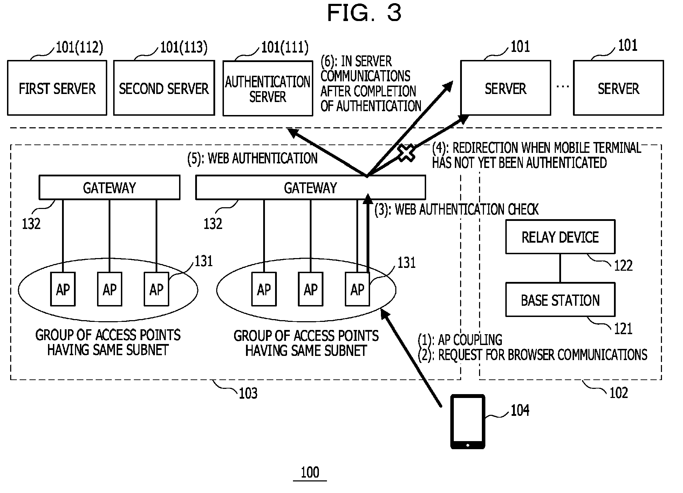

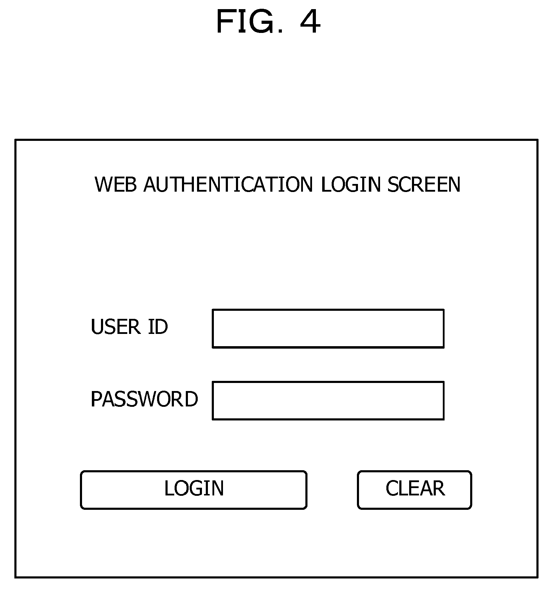

FIG. 3 is a diagram exemplifying authentication processing by a web authentication system. At the access points 131 of the wireless LAN line 103 of a public network, the web authentication system is used for authentication of the user for example. As illustrated in FIG. 3, suppose that, in web authentication, the mobile terminal 104 couples to the access point 131 ((1) of FIG. 3) and then carries out communications by a browser ((2) of FIG. 3). In this case, the gateway 132 checks whether or not the mobile terminal 104 that carries out communications has been already authenticated ((3) of FIG. 3). Then, if the mobile terminal 104 that carries out communications has not yet been authenticated, the gateway 132 carries out redirection of the coupling destination of the communications to the authentication server 111 ((4) of FIG. 3). As a result, the mobile terminal 104 couples to a website of the web authentication provided by the authentication server 111 ((5) of FIG. 3). FIG. 4 is a diagram exemplifying an authentication screen of a website of the web authentication. Then, when the user inputs an identification (ID) and a password on the authentication screen by using the mobile terminal 104 and transmits the ID and the password to the authentication server 111, the authentication server 111 executes authentication processing. If the authentication of the user succeeds in the authentication server 111, the gateway 132 treats the mobile terminal 104 as a terminal that has been authenticated and permits the subsequent communications ((6) of FIG. 3). For example, in the web authentication, authentication of the mobile terminal 104 is carried out in the above-described manner. The processing of the web authentication may be executed through an application such as a browser operated through execution of a program by the control unit 200 of the mobile terminal 104 for example. Furthermore, communications via the mobile phone line 102 and the wireless LAN line 103 by the control unit 200 of the mobile terminal 104, which will be described later, may be carried out through an application such as a browser for example.

Furthermore, in recent years, a subscriber identity module (SIM) authentication system has been used as another example of authentication of the user in the wireless LAN line 103. The SIM authentication system is a system in which automatic authentication is carried out by the SIM card. In the SIM authentication system, authentication of a user is completed on the basis of information read from a SIM card at the time of a coupling to the access point 131. Thus, the user does not have to input an ID, a password, and so forth. However, in the present circumstances, the mobile terminal 104 that does not support the SIM authentication still remains. Therefore, the access point 131 of the web authentication system and the access point 131 that can use both the web authentication system and the SIM authentication system are used. Furthermore, for example, even with the mobile terminal 104 that supports the SIM authentication system, once authentication processing is executed by the web authentication system, authentication processing by the web authentication system is executed in a coupling to the access point 131 that provides only web authentication.

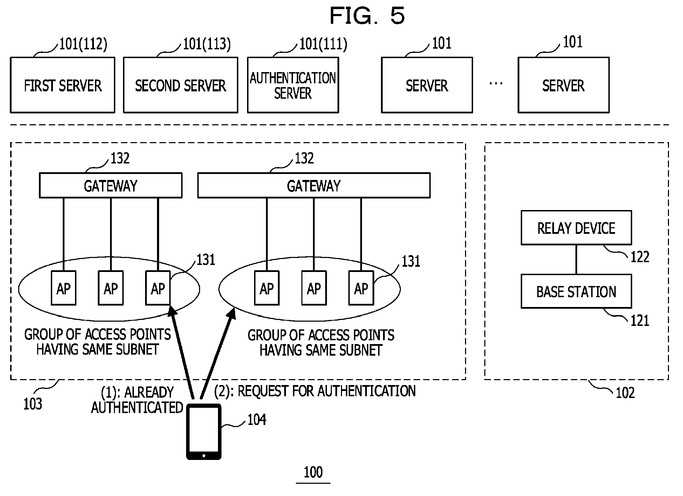

Moreover, in the web authentication, an authentication system is constructed for each one local area network system. Therefore, authentication is requested again when the local area changes. FIG. 5 is a diagram explaining request for authentication due to change of a subnet. For example, suppose that the mobile terminal 104 has succeeded in authentication and been already authenticated at the access point 131 in an access point group belonging to a certain subnet ((1) of FIG. 5). Also in this case, when the mobile terminal 104 moves to a different local area and the subnet of the internet protocol (IP) address changes, authentication is requested again by the gateway 132 of a local area network system that constructs a different subnet ((2) of FIG. 5). Then, the mobile terminal 104 becomes the state in which communications by the wireless LAN line 103 are not permitted until authentication is completed in the local area network system that constructs the different subnet. As one example, when a user moves by train in commuting, even when the user couples to the access point 131 at a station at which the user boards a train and authentication has been completed once, web authentication is requested again if the user links to the access point 131 belonging to another local area at a station in the middle of the movement. Many opportunities of using the web authentication when using the wireless LAN line 103 as above still exist.

Furthermore, in the web authentication, the authentication processing comes not to progress even when the communication quality of the wireless LAN line 103 is favorable in some cases. For example, if plural mobile terminals 104 couple to the access point 131 at one time, the communication resources between the access point 131 and the mobile terminals 104 often become insufficient. Alternatively, if plural mobile terminals 104 couple to the access point 131, a load is imposed on the authentication server 111 and the authentication processing comes not to progress in some cases. As a result, for example, even in the situation in which the communication quality of a wireless LAN is favorable and communications can be carried out by the wireless LAN as long as authentication is completed, the authentication does not proceed and it is difficult to use the wireless LAN line 103 in some cases. Furthermore, in this case, it is difficult for the user to distinguish whether the authentication stops due to the deterioration of the communication quality of the wireless LAN or the authentication stops due to congestion and the user turns off the wireless LAN line 103 in some cases. As a result, for example, the situation occurs in which the wireless LAN line 103 is not used although trouble is taken to set the access point 131 in order to offload packets of the mobile phone line 102.

It is conceivable that the mobile terminal 104 is equipped with a simultaneous communication function of carrying out simultaneous communications with the mobile phone line 102 and the wireless LAN line 103 in order to suppress inaccessibility to the server 101 due to communication failure of the wireless LAN line 103. I n this case, the control unit 200 of the mobile terminal 104 determines whether or not the communication quality of the wireless LAN line 103 is higher than a determination criterion for example. Then, for example, if the communication quality of the wireless LAN line 103 is higher than the determination criterion, the control unit 200 controls the first radio interface 221 to carry out communications by the wireless LAN line 103. Furthermore, for example, if the communication quality of the wireless LAN line 103 decreases to the determination criterion or lower, the control unit 200 does not carry out communications by the wireless LAN line 103 even when linking to the access point 131, and controls the second radio interface 222 to carry out communications by the mobile phone line 102. Therefore, the user can access the server 101 by the mobile phone line 102 even when the wireless LAN line 103 involves communication failure.

However, if the mobile terminal 104 is equipped with the function of simultaneous communications with the mobile phone line 102 and the wireless LAN line 103, the simultaneous communication function distributes communications to the mobile phone line 102 in the middle of web authentication and the web authentication fails in some cases.

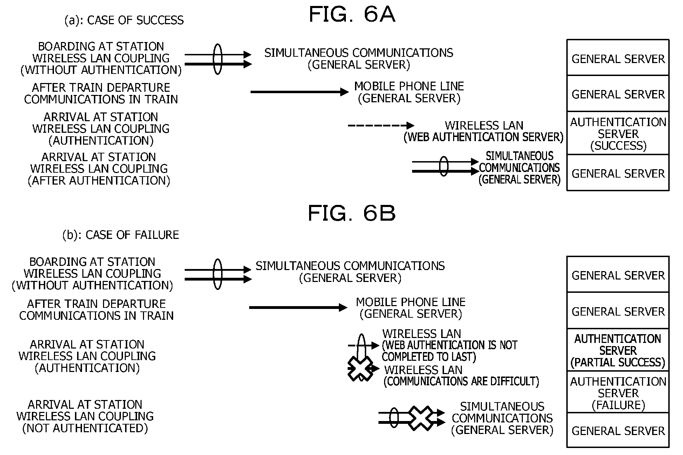

FIGs. 6A and 6B are diagrams exemplifying success and failure in web authentication processing by a simultaneous communication function. FIG. 6A is a diagram exemplifying the case in which web authentication succeeds. In FIG. 6A, for example, a user couples to the wireless LAN line 103 by the mobile terminal 104 and gets web authentication done when boarding a train at a station, and thereafter couples to the general server 101 by simultaneous communications with the mobile phone line 102 and the wireless LAN line 103. After the train departs, the communication quality of the wireless LAN line 103 deteriorates and the mobile terminal 104 carries out communications by the mobile phone line 102. When arriving at a different station and coupling to the access point 131 of the wireless LAN line 103 belonging to a different subnet, the user of the mobile terminal 104 carries out web authentication again by the wireless LAN line 103. Then, if the authentication succeeds, it becomes possible to couple to the general server 101 by simultaneous communications with the mobile phone line 102 and the wireless LAN line 103 from then on.

On the other hand, FIG. 6B is a diagram exemplifying the case in which web authentication fails. Also in FIG. 6B, communications are carried out similarly to FIG. 6A until the mobile terminal 104 carries out communications via the mobile phone line 102 after train departure. Subsequently, when arriving at a different station and coupling to the access point 131 of the wireless LAN line 103 belonging to a different subnet, the user of the mobile terminal 104 carries out web authentication again in the wireless LAN line 103. However, if the simultaneous communication function distributes communications to the mobile phone line 102 in this authentication processing, the authentication fails because it is difficult to access the authentication server 111 from the mobile phone line 102, so that the web authentication is not completed to the last. As a result, simultaneous communications are difficult and communications by the mobile phone line 102 are carried out.

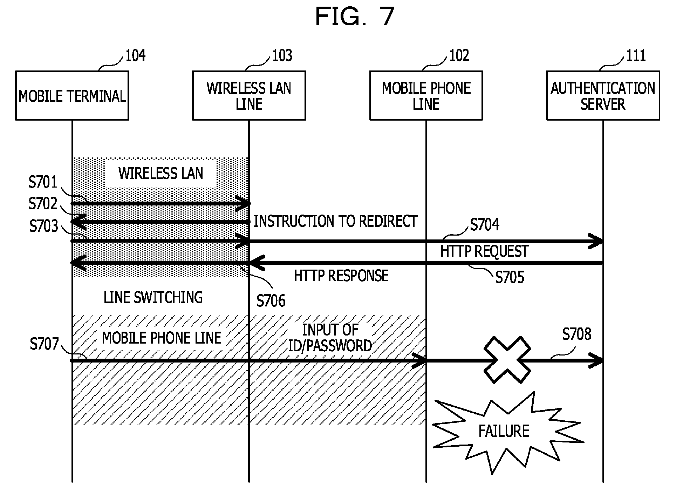

With reference to FIG. 7, the case in which web authentication fails in simultaneous communications with the mobile phone line 102 and the wireless LAN line 103 will be described in more detail. FIG. 7 is a sequence diagram exemplifying the case in which web authentication fails in simultaneous communications with the mobile phone line 102 and the wireless LAN line 103.

In FIG. 7, the control unit 200 of the mobile terminal 104 couples to the access point 131 of the wireless LAN line 103 and transmits a hypertext transfer protocol (HTTP) request toward the server 101 that provides a website desired to be coupled through a browser for example (S701). When receiving the HTTP request, the gateway 132 of the wireless LAN line 103 determines whether or not the mobile terminal 104 as the transmission source of the received HTTP request has been authenticated. Then, if the mobile terminal 104 has not yet been authenticated, the gateway 132 returns, to the mobile terminal 104, an instruction to carry out redirection to an authentication site provided by the authentication server 111 (S702). When receiving the instruction of the redirection, the mobile terminal 104 transmits an HTTP request toward the authentication site provided by the authentication server 111 (S703), and the gateway 132 transmits the HTTP request to the authentication server 111 (S704). When receiving the HTTP request, the authentication server 111 returns an HTTP response to the gateway 132 (S705), and the gateway 132 of the wireless LAN line 103 returns the HTTP response to the mobile terminal 104 (S706). As a result, for example, the authentication screen of FIG. 4 is displayed on the display screen of a display device included in the mobile terminal 104.

Subsequently, the user of the mobile terminal 104 inputs an ID and a password to the authentication screen and transmits the ID and the password toward the authentication server 111. However, for example if the simultaneous communication function of the mobile terminal 104 distributes communications to use the mobile phone line 102 at this time (S707), it is difficult to access the authentication server 111 from the mobile phone line 102 (S708) and thus the web authentication is not completed. As a result, the mobile terminal 104 does not receive a response from the authentication server 111 and the authentication processing stops. Thus, for example, the display screen of the display device included in the mobile terminal 104 becomes the state in which the display freezes.

For this reason, it is desired to provide a technique of controlling the distribution of communications to suppress communications by the mobile phone line 102 in web authentication.

For example, it is conceivable that access to a first server 112 that is set to return an error is attempted by the wireless LAN line 103 and whether or not web authentication is being currently carried out is determined from the response to the access in order to suppress communications by the mobile phone line 102 in web authentication. As the first server 112, a server that is set to return "204 NO Content," which indicates that the response entity to be returned does not exist, among HTTP status codes when being accessed can be used for example. For example, when the mobile terminal 104 attempts to access such a first server 112 by the wireless LAN line 103, an error of "204 NO Content" is returned as a response to the request from the server if the access can be made. However, for example if the gateway 132 determines that the mobile terminal 104 is a terminal that has not been authenticated when the mobile terminal 104 couples to the wireless LAN line 103, the gateway 132 carries out redirection and forcibly changes the coupling destination to the authentication server 111. Therefore, success (for example, 200 OK of an HTTP status code) is returned from the authentication server 111.

Therefore, for example, the mobile terminal 104 can determine whether or not authentication is being carried out from the result of an attempt to access the first server 112 set to return a given error by the wireless LAN line 103. Furthermore, for example, suppose that success (for example, 200 OK of an HTTP status code) is returned as the result of an attempt to access the first server 112 by the mobile terminal 104 by the wireless LAN line 103. In this case, the mobile terminal 104 determines that web authentication is being carried out, and fixes communications to the wireless LAN line 103 until the web authentication is completed and carries out control so as not to use the mobile phone line 102. This allows the mobile terminal 104 to properly complete the web authentication. For example, when the web authentication is completed, the response when access to the first server 112 is attempted by the wireless LAN line 103 becomes the error of "204 NO Content." Therefore, the mobile terminal 104 can determine that the authentication has been completed if the response is the error of "204 NO Content" when the mobile terminal 104 attempts to access the first server 112 by the wireless LAN line 103.

Furthermore, for example, also in the case of web authentication at a hotel or an airport, processing of web authentication by redirection occurs in a coupling to the access point 131 and therefore whether or not web authentication is being carried out can be determined by the above-described processing.

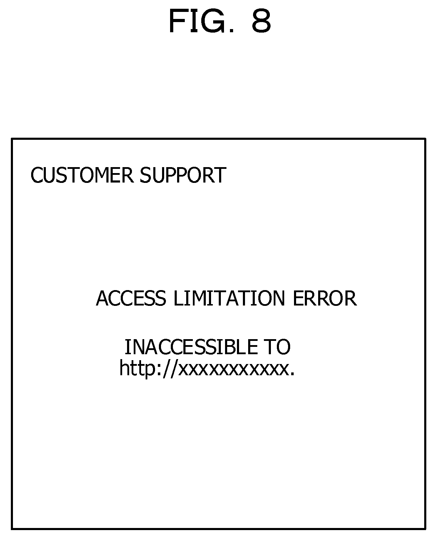

However, access limitation (may be referred to as a blocking of specified communications) is set in the mobile terminal 104 or the SIM in some cases. For example, in the mobile terminal 104 or the SIM that is for professional use or is used by a minor, access limitation is set in order to suppress the user from accessing an undesirable website. Furthermore, when the mobile terminal 104 on which the access limitation is set or the mobile terminal 104 equipped with the SIM attempts to access an unpermitted website, the mobile terminal 104 is redirected to the second server 113 that notifies that the mobile terminal 104 is subjected to the access limitation for example. FIG. 8 is a diagram exemplifying a display screen of a website provided by the second server 113 that notifies that the mobile terminal 104 is subjected to the access limitation.

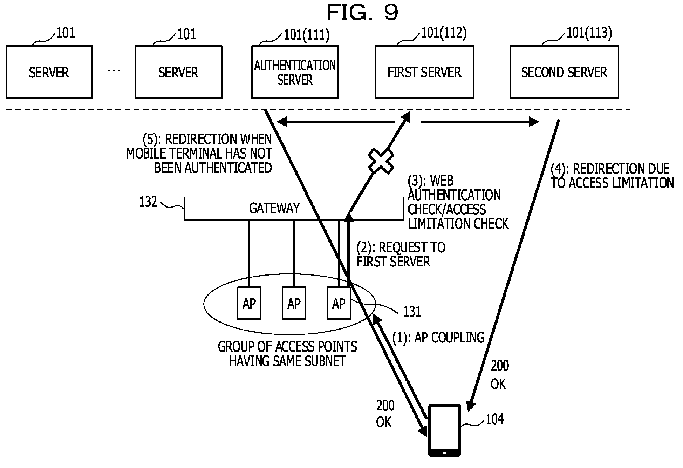

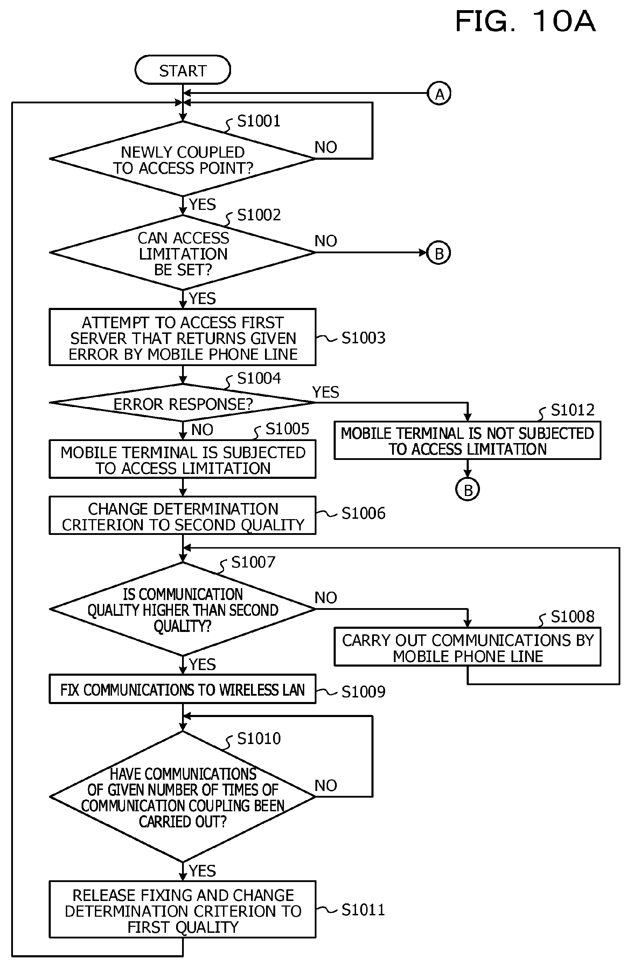

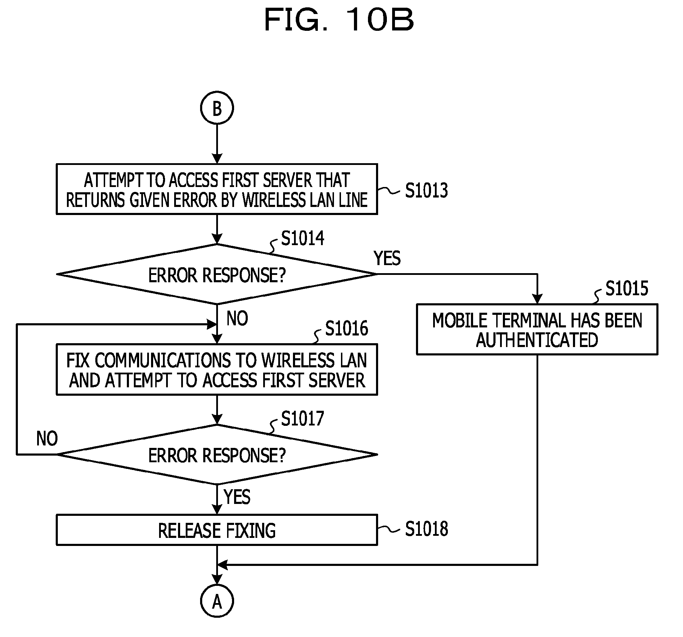

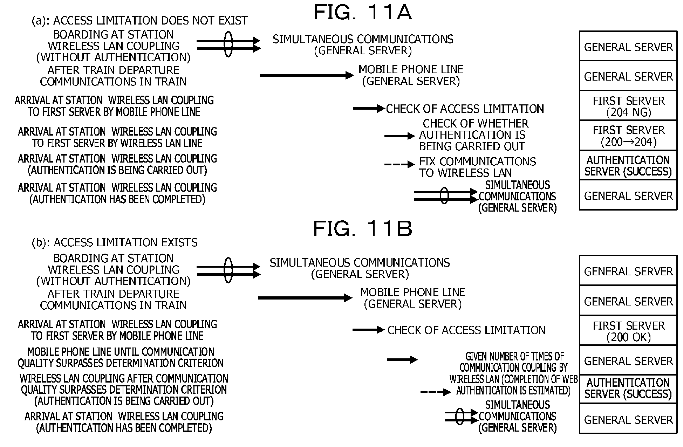

FIG. 9 is a diagram explaining redirection for authentication and redirection due to access limitation. When the mobile terminal 104 couples to the access point 131 ((1) of FIG. 9), first the mobile terminal 104 attempts to access a website of the first server 112 set to return a given error ((2) of FIG. 9). When receiving the request from the mobile terminal 104, the gateway 132 checks whether or not the mobile terminal 104 has been authenticated and whether or not the mobile terminal 104 is a terminal of the object of the access limitation ((3) of FIG. 9). Then, if the mobile terminal 104 is a terminal of the object of the access limitation, the gateway 132 carries out redirection of the coupling destination to the second server 113, which notifies the access limitation. As a result, the second server 113, which notifies the access limitation, returns success in the access (for example, 200 OK of an HTTP status code) to the mobile terminal 104 ((4) of FIG. 9). Furthermore, if the mobile terminal 104 has not been authenticated, the gateway 132 carries out redirection of the coupling destination to the authentication server 111. As a result, the authentication server 111 returns success in the access (for example, 200 OK of an HTTP status code) to the mobile terminal 104 ((5) of FIG. 9). For this reason, for example although the mobile terminal 104 accesses the first server 112 set to return the given error and determines whether or not authentication is being currently carried out from a response to this access, it is difficult to distinguish whether redirection is carried out for authentication or redirection is carried out due to the access limitation. Therefore, a technique that can distinguish the redirection for authentication and the redirection due to access limitation is desired. An exemplary embodiment will be described below with reference to FIG. 10, and FIGs. 11A and 11B.

### < Embodiment>

In the exemplary embodiment, the control unit 200 of the mobile terminal 104 attempts to access the first server 112 set to return the given error via the mobile phone line 102. Here, if access limitation exists, the access limitation is imposed even with the mobile phone line 102 and redirection is carried out to the second server 113, which provides the website that notifies that the mobile terminal 104 is subjected to the access limitation. As a result, the second server 113, which provides the website that notifies that the mobile terminal 104 is subjected to the access limitation, returns success (for example, 200 OK of an HTTP status code) to the mobile terminal 104.

On the other hand, if access limitation does not exist, when the control unit 200 of the mobile terminal 104 attempts to access the first server 112 by the mobile phone line 102, the access to the first server 112 succeeds because redirection to the authentication server 111 does not occur from the mobile phone line 102. As a result, the first server 112 returns the given error response (for example, error of "204 NO content" as an HTTP status code) to the mobile terminal 104.

Therefore, the control unit 200 of the mobile terminal 104 can determine (or detect) whether or not the self-terminal is subjected to the access limitation from the response to the attempt to access the first server 112 set to return the given error via the mobile phone line 102. Furthermore, if the self-terminal is not subjected to the access limitation, the control unit 200 can determine whether or not web authentication is being carried out from the response to an attempt to access the first server 112 set to return the given error via the wireless LAN line 103 in the above-described manner.

On the other hand, if the self-terminal is subjected to the access limitation, the mobile terminal 104 is subjected to redirection due to the access limitation although attempting to access the first server 112 set to return the given error. Thus, it is difficult to determine whether or not web authentication is being currently carried out from the response. For this reason, for example, by executing the following processing, the control unit 200 of the mobile terminal 104 suppresses a situation in which the mobile phone line 102 is used in authentication by the wireless LAN line 103 and the web authentication fails.

First, if the self-terminal is subjected to the access limitation, the control unit 200 sets the determination criterion of the communication quality for determining whether or not to select the wireless LAN line 103 by the simultaneous communication function to second quality higher than first quality for the normal state when coupling to the access point 131. Then, if the communication quality of the wireless LAN line 103 is lower than the second quality, the control unit 200 does not use the wireless LAN line 103 and carries out communications by the mobile phone line 102 even when linking to the access point 131 of the wireless LAN line 103. The purpose of this is to avoid failure in web authentication attributed to the communication quality if the communication quality in the wireless LAN line 103 is low.

Furthermore, if the communication quality of the wireless LAN line 103 is higher than the second quality, the control unit 200 of the mobile terminal 104 starts communications by the wireless LAN line 103. Thereafter, the control unit 200 fixes communications to the wireless LAN line 103 until data communications of a given number of times of communication coupling (for example, a given number of continuous sockets) are carried out (or finished), and carries out control so as not to cause data to flow to the mobile phone line 102 and completes the web authentication processing in the interim. Then, after the data communications of the given number of times of communication coupling are carried out, the control unit 200 returns the determination criterion to the first quality and carries out switching to simultaneous communications of the mobile phone line 102 and the wireless LAN line 103.

The communication quality may include the received radio wave intensity (for example, dBm) and the link speed (for example, bps) between the coupled access point 131 and the mobile terminal 104 for example. That is to say, for example if the determination criterion of the communication quality is set to the first quality, the control unit 200 may select the wireless LAN line 103 if the received radio wave intensity is higher than a first threshold and the link speed is higher than a first link speed. Furthermore, if the determination criterion of the communication quality is changed to the second quality, the control unit 200 may select the wireless LAN line 103 if the received radio wave intensity is higher than a second threshold and the link speed is higher than a second link speed for example. The second threshold is a value higher than the first threshold and the second link speed is a link speed higher than the first link speed.

Furthermore, the web authentication processing is executed through an application such as a browser for example. For this reason, the count of the given number of times of communication coupling may be carried out by counting the communication coupling by the application such as a browser that executes the web authentication processing from communications carried out in the mobile terminal 104 for example.

As described above, when the mobile terminal 104 is subjected to the access limitation, if the communication quality of the wireless LAN line 103 is sufficiently favorable, the control unit 200 of the mobile terminal 104 fixes communications to the wireless LAN line 103 and causes data to flow to the wireless LAN line 103 during the given number of times of communication coupling and completes the web authentication processing in the interim. This can suppress a situation in which the mobile phone line 102 is used in authentication by the wireless LAN line 103 and the web authentication fails.

FIG. 10 is a diagram exemplifying an operation flow of the web authentication processing executed by the control unit 200 of the mobile terminal 104 according to the embodiment. The control unit 200 of the mobile terminal 104 may start the operation flow of FIG. 10 when the first radio interface 221 for coupling to the wireless LAN line 103 is turned on in the mobile terminal 104 for example.

In a step 1001 (hereinafter, step will be described as "S" and the step 1001 will be represented as S1001 for example), the control unit 200 of the mobile terminal 104 determines whether or not the mobile terminal 104 has newly coupled to the access point 131 of a web authentication system. If the mobile terminal 104 has not newly coupled to the access point 131 of the web authentication system (NO in S1001), the flow repeats S1001. On the other hand, if the mobile terminal 104 has newly coupled to the access point 131 of the web authentication system (YES in S1001), the flow proceeds to S1002.

In S1002, the control unit 200 of the mobile terminal 104 determines whether or not the coupled access point 131 is an access point used in the wireless LAN line 103 in which access limitation can be set. For example, the service set identifier (SSID) set in the access point 131 of the wireless LAN line 103 provided by a mobile phone operator is settled. Thus, the control unit 200 of the mobile terminal 104 may determine, from the SSID, whether or not the access point 131 is an access point used in the wireless LAN line 103 in which access limitation can be set.

If the access point 131 is an access point used in the wireless LAN line 103 in which access limitation can be set (YES in S1002), the flow proceeds to S1003. In S1003, the control unit 200 of the mobile terminal 104 attempts to access the first server 112 set to return a given error (for example, 204 of an HTTP status code) via the mobile phone line 102. In S1004, the control unit 200 of the mobile terminal 104 determines whether or not the response to the access is the given error response (for example, 204 of an HTTP status code) set in the first server 112 of the coupling destination. If the response is not the given error response (NO in S1004), the flow proceeds to S1005. In S1005, the control unit 200 determines that the mobile terminal 104 is subjected to access limitation and redirection is carried out.

In S1006, the control unit 200 changes the determination criterion of the communication quality used to determine whether or not to select the wireless LAN line 103 by the simultaneous communication function to the second quality higher than the first quality for the normal state. In S1007, the control unit 200 determines whether or not the communication quality of the wireless LAN line 103 is higher than the second quality. If the communication quality of the wireless LAN line 103 is equal to or lower than the second quality (NO in S1007), the flow proceeds to S1008 and the control unit 200 carries out communications via the mobile phone line 102. Then, the flow returns to S1007. On the other hand, if the communication quality of the wireless LAN line 103 is higher than the second quality (YES in S1007), the flow proceeds to S1009. I n S1009, the control unit 200 fixes the distribution destination of data to be communicated to the first radio interface 221 and carries out communications by the wireless LAN line 103. Subsequently, in S1010, the control unit 200 determines whether or not communications of a given number of times of communication coupling have been carried out. If communications of the given number of times of communication coupling have not been carried out (NO in S1010), the control unit 200 continues communications by the wireless LAN line 103 while fixing the distribution destination of data to be communicated to the first radio interface 221, and the flow repeats the processing of S1010. On the other hand, if communications of the given number of times of communication coupling have been carried out (YES in S1010), the flow proceeds to S1011. In S1011, the control unit 200 releases the fixing of the distribution destination of data to be communicated to the first radio interface 221 and carries out simultaneous communications. Furthermore, the control unit 200 changes the determination criterion of the communication quality from the second quality to the first quality and the flow returns to S1001.

Furthermore, if the access point 131 is not an access point used in the wireless LAN line 103 in which access limitation can be set in S1002 (NO in S1002), the flow proceeds to S1013. If the response is the given error response in S1004 (YES in S1004), the flow proceeds to S1012 and the control unit 200 determines that the mobile terminal 104 is not subjected to access limitation. Also in this case, the flow proceeds to S1013.

In S1013, the control unit 200 attempts to access the first server 112 set to return the given error (for example, 204 of an HTTP status code) via the wireless LAN line 103. In S1014, the control unit 200 determines whether or not the response to the access is the given error response (for example, 204 of an HTTP status code) set in the first server 112 of the coupling destination. If the response is the given error response (YES in S1014), the mobile terminal 104 is not subjected to redirection to the authentication server 111 and therefore the control unit 200 determines that the mobile terminal 104 has been authenticated in S1015, followed by the return of the flow to S1001.

On the other hand, if the response is not the given error response in S1014 (NO in S1014), the mobile terminal 104 is subjected to redirection to the authentication server 111 and the flow proceeds to S1016. In S1016, the control unit 200 fixes the distribution destination of data to be communicated to the first radio interface 221 and attempts to access the first server 112 set to return the given error via the wireless LAN line 103. In S1017, the control unit 200 determines whether or not the response is the given error response set in the first server 112 of the coupling destination. The given error response may be 204 of an HTTP status code for example. If the response is not the given error response (NO in S1017), the flow returns to S1016 and repeats the processing. The user may carry out web authentication in the period of the repetitive processing of S1016 and S1017.

If the response is the given error response in S1017 (YES in S1017), the web authentication has been completed and thus the flow proceeds to S1018. The control unit 200 releases the fixing of the distribution destination of data to be communicated to the first radio interface 221 and carries out simultaneous communications, followed by the return of the flow to S1001.

In the above operation flow of FIG. 10, in the processing from S1001 to S1006, the control unit 200 of the mobile terminal 104 functions as the changing unit 201 for example. In the processing from S1007 to S1010, the control unit 200 of the mobile terminal 104 functions as the fixing unit 202 for example. In the processing of S1011, the control unit 200 of the mobile terminal 104 functions as the changing unit 201 and the fixing unit 202 for example.

FIGs. 11A and 11 B are diagrams exemplifying a flow of communications in the web authentication processing according to the embodiment. FIG. 11A exemplifies the web authentication processing in the case in which the mobile terminal 104 is not subjected to access limitation. In FIG. 11 A, communications may be carried out similarly to FIG. 6A for example until the mobile terminal 104 carries out communications via the mobile phone line 102 after train departure. Subsequently, suppose that the user arrives at a different station and couples to the access point 131 of the wireless LAN line 103 belonging to a different subnet. In this case, first the mobile terminal 104 attempts to access the first server 112 set to return the given error by the mobile phone line 102. If the mobile terminal 104 is not subjected to access limitation, the response is the given error (for example, 204 of an HTTP status code) from the first server 112. In this case, the mobile terminal 104 attempts to access the first server 112 by the wireless LAN line 103. If the mobile terminal 104 has not been authenticated, the access to the first server 112 is redirected to the authentication server 111 and the mobile terminal 104 receives success in the access (for example, 200 OK of an HTTP status code) from the authentication server 111. In this case, the mobile terminal 104 fixes communications to the wireless LAN line 103 so as not to cause communications for the authentication to flow to the mobile phone line 102. Furthermore, the mobile terminal 104 attempts to access the first server 112 and carries out polling until the response to the access becomes the given error (for example, 204 of an HTTP status code). If the response becomes the given error, the mobile terminal 104 determines that the authentication has been completed, and starts simultaneous communications.

Furthermore, FIG. 11 B is a diagram exemplifying the web authentication processing in the case in which the mobile terminal 104 is subjected to access limitation. In FIG. 11 B, communications may be carried out similarly to FIG. 6A for example until the mobile terminal 104 carries out communications via the mobile phone line 102 after train departure. Subsequently, suppose that the user arrives at a different station and couples to the access point 131 of the wireless LAN line 103 belonging to a different subnet. In this case, first the mobile terminal 104 attempts to access the first server 112 by the mobile phone line 102. If access limitation is imposed on the mobile terminal 104, the access to the first server 112 is redirected to the second server 113, which notifies the access limitation, and the response is success (for example, 200 OK of an HTTP status code). In this case, the mobile terminal 104 sets the determination criterion of the communication quality for determining whether or not to distribute data to the wireless LAN line 103 in simultaneous communications to the second quality higher than the first quality for the normal state. Due to this, communications are carried out by the mobile phone line 102 until favorable communication quality is obtained. Then, if the communication quality becomes higher and more favorable than the second quality, the mobile terminal 104 fixes communications to the wireless LAN line 103 and carries out web authentication until communications of a given number of times of communication coupling are carried out, and completes the authentication. Thereafter, the mobile terminal 104 starts simultaneous communications.

As described above, according to the embodiment, the control unit 200 of the mobile terminal 104 can determine whether or not access limitation is imposed on the self-device. Furthermore, if access limitation is imposed on the self-device, the control unit 200 changes the determination criterion of the communication quality used for determining whether or not to distribute data to the wireless LAN line 103 in simultaneous communications from the first quality to the second quality higher than the first quality. Then, when the communication quality becomes the state of being more favorable than the second quality, the control unit 200 fixes communications to the wireless LAN line 103 and carries out web authentication until communications of a given number of times of communication coupling are carried out, and completes the authentication in the interim. For this reason, the control unit 200 can suppress the flowing of packets to the mobile phone line 102 in the authentication also when access limitation is imposed on the self-device. Therefore, according to the embodiment, failure in the authentication processing can be suppressed.

Furthermore, after communications of the given number of times of communication coupling are carried out, it is estimated that the authentication has been completed. Thus, the fixing of communications to the wireless LAN line 103 is released and the determination criterion is returned from the second quality to the first quality. For this reason, simultaneous communications using the mobile phone line 102 and the wireless LAN line 103 can be carried out after the completion of the authentication.

The communication quality may include the received radio wave intensity and the link speed between the access point 131 of the wireless LAN line 103 and the first radio interface 221 for example. For example, also when the received radio wave intensity between the access point 131 of the wireless LAN line 103 and the first radio interface 221 is high, a low link speed causes communication failure in some cases. Furthermore, for example, also when the link speed between the access point 131 of the wireless LAN line 103 and the first radio interface 221 is high, low received radio wave intensity causes communication failure in some cases. For this reason, by carrying out determination of e.g. S1007 by using both the received radio wave intensity and the link speed as the communication quality, initiation of processing of web authentication in a situation in which the authentication fails attributed to the communication quality can be avoided more accurately.

Although the embodiment is exemplified in the above, the embodiment is not limited thereto. For example, the above-described operation flow is exemplification and the embodiment is not limited thereto. If possible, the operation flow may be carried out with change in the order of the processing and may include further processing additionally or part of processing may be omitted. For example, the processing of S1005, S1012, and S1015 in FIG. 10 does not have to be executed. Furthermore, in another embodiment, the operation flow of FIG. 10 may be changed to proceed to the processing of S1006 when YES is obtained as the determination result in S1001. That is, the processing from S1002 to S1005 and from S1012 to S1018 may be omitted. In this case, for example, also when the mobile terminal 104 is not subjected to access limitation, web authentication is carried out by the processing from S1006 to S1011 and thereby failure in the processing of the web authentication can be suppressed.

Furthermore, in the above-described example, the case in which communications are fixed to the wireless LAN line 103 until communications of a given number of times of communication coupling are carried out in S1010 is exemplified. However, the embodiment is not limited thereto. For example, on the basis of the data communication amount of communications carried out through a browser instead of the number of times of communication coupling, the determination of S1010 may be carried out so that communications may be fixed to the wireless LAN line 103 in the period until the completion of the authentication. Alternatively, the determination of S1010 may be carried out on the basis of another value such as the time so that communications may be fixed to the wireless LAN line 103 in the period until the completion of the authentication. The given number of times of communication coupling used for the determination in S1010 can be set by acquiring the trend in the number of times of communication coupling of communications carried out through an application such as a browser in the period from S1016 to the timing when YES is obtained as the determination result in S1017 for example.

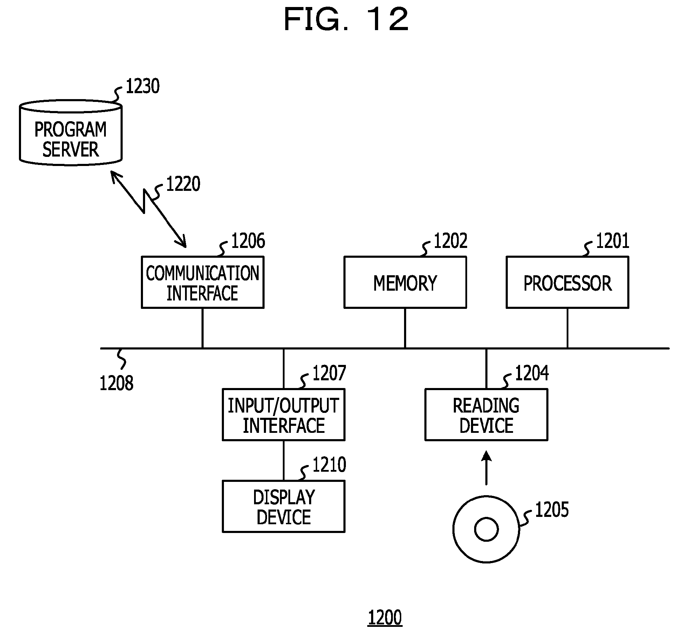

FIG. 12 is a diagram exemplifying a hardware configuration of a computer 1200 for implementing the mobile terminal 104 according to an embodiment. The hardware configuration of the computer 1200 for implementing the mobile terminal 104 of FIG. 12 includes a processor 1201, a memory 1202, a reading device 1204, a communication interface 1206, an input/output interface 1207, and a display device 1210 for example. The processor 1201, the memory 1202, the reading device 1204, the communication interface 1206, and the input/output interface 1207 are coupled to each other via a bus 1208 for example.

The processor 1201 provides functions of part or all of the above-described respective functional units by executing a radio communication program in which the procedure of the above-described operation flow is described for example by use of the memory 1202. For example, the processor 1201 functions as the changing unit 201 and the fixing unit 202 by executing the radio communication program stored in the memory 1202. Furthermore, the storing unit 210 includes the memory 1202 and an attachable/detachable storage medium 1205 for example. In the memory 1202 of the mobile terminal 104, information on the first quality and the second quality, which are the determination criteria of the communication quality, and so forth are stored for example.

The memory 1202 is a semiconductor memory for example and may include a RAM area and a ROM area. The RAM is an abbreviation for Random Access Memory. Furthermore, the ROM is an abbreviation for Read Only Memory.

The reading device 1204 accesses the attachable/detachable storage medium 1205 in accordance with an instruction by the processor 1201. The attachable/detachable storage medium 1205 is implemented by a semiconductor device (USB memory, etc.), a medium to and from which information is input and output by magnetic action (magnetic disc, etc.), a medium to and from which information is input and output by optical action (CD-ROM, DVD, etc.), and so forth for example. The USB is an abbreviation for Universal Serial Bus. The CD is an abbreviation for Compact Disc. The DVD is an abbreviation for Digital Versatile Disk.

The communication interface 1206 couples to a network 1220 in accordance with an instruction by the processor 1201 and transmits and receives data. The above-described communication unit 220 is the communication interface 1206 for example. The communication interface 1206 may include radio communication equipment that operates as the first radio interface 221, which couples to the access point 131, and radio communication equipment that operates as the second radio interface 222, which couples to the base station 121, for example. The input/output interface 1207 may be an interface between an input device and an output device for example. The input device is a device, such as a keyboard and a mouse, that accepts instructions from a user for example. The output device is a sound device such as a speaker and a printing device such as a printer for example. Furthermore, the input/output interface 1207 is coupled to the display device 1210. The display device 1210 may be a display for example. Moreover, the above-described display screens of FIG. 4 and FIG. 8 may be displayed on the display device 1210 for example.

The respective programs according to the embodiment are provided to the mobile terminal 104 in the following forms for example.
(1) the programs are installed on the memory 1202 in advance.
(2) the programs are provided by the attachable/detachable storage medium 1205.
(3) the programs are provided from a server 1230 such as a program server.

The hardware configuration of the computer 1200 described with reference to FIG. 12 is exemplification and the embodiment is not limited thereto. For example, functions of part or all of the above-described functional units may be implemented as hardware based on FPGA, SoC, etc. The FPGA is an abbreviation for Field Programmable Gate Array. The SoC is an abbreviation for System-on-a-chip.

I n the above, several embodiments are described. However, embodiments are not limited to the above-described embodiments and may be understood as what includes various kinds of modified forms and alternative forms of the above-described embodiments. For example, it will be understood that various kinds of embodiments can be embodied by modifying a constituent element within such a range as not to depart from the gist and range thereof. Furthermore, it will be understood that various embodiments can be carried out by combining, as appropriate, plural constituent elements disclosed in the above-described embodiments. Moreover, it will be understood by those skilled in the art that various embodiments can be carried out by deleting or replacing several constituent elements from all constituent elements represented in the embodiments or adding several constituent elements to the constituent elements represented in the embodiments.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A radio communication device comprising:
a first radio interface configured to be wirelessly coupled to a first wireless station via a first radio access network, the first wireless station coupled to a specified network;
a second radio interface configured to be wirelessly coupled to a second wireless station via a second radio access network, the second wireless station coupled to the specified network; and
a control unit configured to:
perform wireless communications using at least one of the first radio access network and the second radio access network, the first radio access network configured to be used when a communication quality of the first radio access network is higher than a threshold value, the second radio access network configured to be used when a communication quality of the first radio access network is equal to or lower than the threshold value, and
fix a radio access network for communicating with the specified network, when the control unit starts the wireless communications using the first radio access network and the control unit detects that a blocking of specified communications is set to the radio communication device, to the first radio access network until the wireless communications of specified times are finished using the first radio access network.

2. The radio communication device according to claim 1, wherein
the control unit is configured to change, when the control unit starts the wireless communications using the first radio access network and the control unit detects that the blocking of specified communications is set to the radio communication device, the threshold value from a first value indicating a first link communication quality to a second value indicating a second link communication quality better than the first link communication quality.

3. The radio communication device according to any of the preceding claims, wherein
the control unit is configured to detect the blocking of specified communications is set to the radio communication device when the control unit detect that the control unit is incapable of accessing a first server included in the specified network using the second radio access network.

4. The radio communication device according to any of the preceding claims, wherein
the first server is configured to transmit a specified error in response to a request, and
the control unit is configured to detect that the control unit is incapable of accessing the first server when the control unit transmits the request to the first server using the second radio access network and does not receive the specified error from the first server .

5. The radio communication device according to any of the preceding claims, wherein
the specified error is an Hypertext Transfer Protocol (HTTP) error indicating the server has no content.

6. The radio communication device according to any of the preceding claims, wherein
the control unit is configured to access, when the control unit starts the wireless communications using the first radio access network and the radio communication device is not authenticated, a second server for being authenticated using the first radio access network.

7. The radio communication device according to any of the preceding claims, wherein
the control unit is configured to stop the fixing of the radio access network for communicating with the specified network after the wireless communications of the specified times are finished using the first radio access network.

8. The radio communication device according to any of the preceding claims, wherein
the control unit is configured to change the threshold value from the second value to the first value after the wireless communications of the specified times are finished using the first radio access network.

9. The radio communication device according to any of the preceding claims, wherein
the communication quality of the first radio access network includes at least one of a received signal strength in the first radio interface and a link speed of the first radio access network.

10. A radio communication method comprising:
performing by a radio communication device wireless communications using at least one of a first radio access network and a second radio access network, the first radio access network configured to be used when a communication quality of the first radio access network is higher than a threshold value, the second radio access network configured to be used when a communication quality of the first radio access network is equal to or lower than the threshold value, the radio communication device including a first radio interface and a second radio interface, the first radio interface configured to be wirelessly coupled to a first wireless station via the first radio access network, the first wireless station coupled to a specified network, the second radio interface configured to be wirelessly coupled to a second wireless station via the second radio access network, the second wireless station coupled to the specified network; and
fixing by the radio communication device a radio access network for communicating with the specified network, when a processor starts the wireless communications using the first radio access network and the processor detects that a blocking of specified communications is set to the radio communication device, to the first radio access network until the wireless communications of specified times are finished using the first radio access network.

11. A radio communication program which, when executed on a computer, causes the computer to carry out the radio communication method according to claim 10.
